# EUROPÄISCHE PATENTSCHRIFT

(11) **EP 1 149 900 B1**
(45) Veröffentlichungstag und Bekanntmachung des Hinweises auf die Patenterteilung: **03.08.2005**
(21) Anmeldenummer: 01250148.2
(22) Anmeldetag: 26.04.2001
(51) Int. Cl.: C12N 5/08, A01N 1/02

(54) **Lösung zur Konservierung menschlicher Leberzellen, konservierte Leberzelle, und ihre Verwendung**
Solution for preserving human liver cells, preserved cells, and their use
Solution pour preserver des cellules de foie humaines, cellules preserves, et leur utilisation

(30) Priorität: 26.04.2000 DE 10020507
(43) Veröffentlichungstag der Anmeldung: 31.10.2001
(73) Patentinhaber: Thasler, Wolfgang, Dr., 81377 München (DE); Weiss, Thomas S., Dr. rer. nat, 93049 Regensburg (DE)
(72) Erfinder: Thasler, Wolfgang, Dr.med., 81377 München (DE); Jauch, Karl-Walter, Prof. Dr., 81377 München (DE); Weiss, Thomas S, Dr. rer. nat,, D-93049 Regensburg (DE)
(74) Vertreter: Ziebig, Marlene, Dr. Dipl.-Chem.

(56) Entgegenhaltungen:
- PAHERNIK ET AL: "Hypothermic storage of pig hepatocytes: Influence of different storage solutions and cell density" CRYOBIOLOGY,ACADEMIC PRESS INC,US,, Bd. 33, 1996, Seiten 552-566, XP002171243
- MARSH D C ET AL: "Hypothermic preservation of hepatocytes II. Importance of Ca2 and amino acids" CRYOBIOLOGY,ACADEMIC PRESS INC,US, Bd. 27, Nr. 1, Februar 1990 (1990-02), Seiten 1-8, XP000973919 ISSN: 0011-2240
- DUTKOWSKI: "Leberstoffwechsel während kalter ischämischer Inkubation in UW-Lösung am Rattenmodell" LANGENBECKS ARCH. CHIR., Bd. 382, 1997, Seiten 343-348, XP000926535
- DATABASE WPI Derwent Publications Ltd., London, GB; AN 1987-270009 XP002171325 "Preserving liver cells on storage - involves cooled medium 199, in evacuated ampoule filled with argon" & SU 1 289 437 A (KAZA CLINICAL SURGE), 15. Februar 1987 (1987-02-15)

## Beschreibung

Die vorliegende Erfindung betrifft eine Lösung zur Konservierung menschlicher Leberzellen, welche die Bestandteile Natriumlaktobionat, Kalium-Hydrogen-Phosphat, Magnesiumsulfat, Raffinose, Glutathion sowie Fructose, Adenosin und Glycin aufweist. Die Erfindung betrifft weiterhin ein Verfahren zu ihrer Herstellung.

Die Leber ist mit 1,5 kg Gewicht die größte Drüse des menschlichen Körpers. Sie liegt vorwiegend im rechten Oberbauch, besitzt eine konvexe Oberfläche und ist mit dem Zwerchfell verwachsen. Die Unterfläche der Leber, an der die Gallenblase austritt, liegt mit der Pfortader auf den Baucheingeweiden auf. Die Leber besitzt eine rot-braune Farbe und besteht aus einem komplexen Verbund verschiedener Zelltypen, die innerhalb des Organs eine Vielzahl von lebensnotwendigen Aufgaben wahrnehmen. So besitzt die Leber neben ihrer Depotfunktion ebenso metabolische, synthetische und sekretorische Funktionen.

Diese komplexen Aufgaben werden von spezialisierten Leberzellen wahrgenommen. Sie sind hochdifferenzierte Zellen, die in der gesunden Leber keine Zellteilungsaktivität mehr besitzen. Die Hepatozyten, die auch als parenchymale Zellen bezeichnet werden, bilden mit 75% der Gesamtzahl der Leberzellen (ca. 10¹²) zahlenmäßig den wichtigsten Bestandteil des Organs. Bezüglich der Masse der Leber machen Hepatozyten sogar ca. 85% ihres Gewichtes aus.

Weitere wichtige Leberzellpopulationen sind die Endothelzellen, die fettspeichernden Itozellen sowie die zum Immunsystem gehörenden gewebetypischen Makrophagen, die innerhalb der Leber als Kupfferzellen bzw. nach ihrem Entdecker auch als Kupffer-Sternzellen bezeichnet werden. Diese mononukleären Zellen liegen vor allem im Inneren der Leberkapillaren und entnehmen dem Pfortaderblut durch Phagozytose körperfremde Substanzen wie Bestandteile von infektiösen Erregern, zu denen insbesondere Viren, Bakterien und sonstige Pathogene gezählt werden. Innerhalb der Kupfferzellen werden die körperfremden Substanzen in ihre Bestandteile zerlegt, dadurch für den Organismus unschädlich gemacht und entsorgt.

Die Gesamtheit der Leberzellen neben den Hepatozyten wird als littorale Zellen oder Stroma bezeichnet. Sie machen zusammen nur ca. 5-10% der Masse des Organs aus. Zur restlichen Masse der Leber gehören auch Gallengangs-Epitelzellen, welche die Gallengänge auskleiden. Über sie wird das gelbliche, zu 99% aus Wasser bestehende Lebersekret, (=Galle bzw. Gallenflüssigkeit) in die Gallenblase geleitet, wo es durch Wasserrückresorption eingedickt und gespeichert wird.

Das Verhältnis des Lebergewichtes zum gesamten Körpergewicht bleibt während des Lebens eines erwachsenen Menschen stets konstant. Eine messbare Zunahme der Zahl der Hepatozyten (Leberzellproliferation) wird in der adulten Leber nur in Form der kompensatorischen Zellvermehrung als Antwort auf den Verlust funktioneller Hepatozyten beobachtet. Ein solcher Ausfall von Hepatozyten kann beispielsweise durch eine teilweise chirurgische Entfernung der Leber (Leberresektion) oder infolge der Beeinflussung des Organs durch Substanzen bzw. Medikamente, die für die Leber giftig sind (hepatotoxische Substanzen) hervorgerufen werden. Unabhängig von der Ursache des Zellverlustes, reagieren die überlebenden Hepatozyten mit einer massiven Zellproliferation, so dass wenige verbleibende Zellen (klinische Daten sprechen von weniger als 20% der ursprünglichen Hepatozyten) die vollständige Größe der Leber in kurzer Zeit wiederherstellen können. Generell ist jedoch im menschlichen Organismus der massive Verlust von Hepatozyten durch chirurgische Eingriffe oder durch eine fulminante Leberentzündung (Hepatitis) vergleichsweise selten. Wesentlich häufiger ist der auf kleine Regionen der Leber begrenzte Verlust von Hepatozyten in Folge einer akuten Leberinfektion durch Medikamente oder durch Viren (Hepatitis B Virus (HBV) oder Hepatitis C Virus (HCV)). Ebenso führen eine chronische Lebererkrankung aufgrund einer bereits vor längerer Zeit erfolgten HBV-Infektion oder eine Leberzirrhose zu dem beschriebenen lokalen Verlust von Hepatozyten. Bei diesen Erkrankungen wird in der Regel eine örtlich begrenzte, kompensatorische Proliferation der Leber beobachtet, die häufig mit einer Einspülung von lymphozytären Zellen (Lymphozyten-Infiltration), entzündlichen Reaktionen und einer Proliferation der littoralen Zellen, einschließlich einer starken Vermehrung der Masse der extrazellulären Matrix einhergeht.

Die Leber ist ein dynamisches Organ, das eine wichtige Rolle in einer großen Anzahl von physiologischen und mikrophysiologischen Prozessen spielt, wobei die Stoffwechselaktivitäten (Intermediärstoffwechsel) der Leber von entscheidender Bedeutung für die Versorgung des Gehirns, der Muskulatur und anderer peripherer Organe mit Brennstoffen (Kohlenhydraten) ist. Die meisten im Verdauungstrakt resorbierten Stoffe passieren die Leber, wo ihre chemische Umsetzung (Verstoffwechselung) erfolgt. So kontrolliert die Leber die Konzentration zahlreicher kleiner essentieller Bausteine (Metabolite) im Blut. Trotz der prinzipiell gleichen metabolischen Mechanismen unterscheiden sich, aufgrund der genetischen Varietät der Menschen, die Muster der Verstoffwechselung zwischen den einzelnen Individuen.

Die Leber ist das zentrale Organ des Kohlehydratstoffwechsels, sie kann große Mengen Zucker (Glukose) aus dem Blut aufnehmen und in die Speicherform Glykogen umwandeln. Andererseits kann die Leber Glucose an das Blut abgeben, indem sie über einen Prozess, der als Gluconeogenolyse bezeichnet wird, den Glykogenvorrat mobilisiert.

Die Leber steht auch im Mittelpunkt der Kontrolle des Lipid-(Fett-)Stoffwechsels. Werden durch die Nahrung ausreichende Mengen an Kohlehydraten aufgenommen, synthetisiert die Leber Fettsäure, verestert sie und gibt sie dann in Form von Lipoproteinen sehr geringer Dichte an das Blut ab. Dieses Plasmalipoprotein liefert den größten Teil der Fettsäuren, die vom Fettgewebe für spezielle Synthesen verwendet werden. Ist der Ernährungszustand dagegen schlecht, wandelt die Leber Fettsäuren in Ketonkörper um.

In der Leber laufen somit der Kohlehydrat-, der Fettsäure- und der Aminosäurestoffwechsel zusammen, die gemeinsam die entscheidenden Stoffwechselprozesse des menschlichen Organismus ausmachen. Die wichtigsten Vorstufen für diese Stoffwechselprozesse sind Milchsäure und Alanin aus dem Muskel, Glycerin aus dem Fettgewebe und glucogene Aminosäuren aus der Nahrung. Wegen ihrer großen metabolischen Kompetenz, ihrer zentralen Funktion und ihrer Regenerationsfähigkeit wird die Leber daher auch als "Bioreaktor" bezeichnet.

Aufgrund ihrer zentralen Stellung innerhalb des Organismus kommt der Leber entscheidende Bedeutung bei der Entgiftung von schädlichen Substanzen durch Enzyme des Cytochrom P450 Systems über Monooxygenasen zu. Diese mischfunktionellen Oxygenasen katalysieren die Einführung einer OH-Gruppe, wobei der Sauerstoff nicht aus Wasser, sondern aus O₂ stammt (Hydroxylierung). Bei der Synthese von Gallensäuren erfolgt dies durch das Enzym P450, ein spezielles Cytochrom, welches das letzte Glied einer Elektronentransportkette in der Leber darstellt. Die entscheidende Funktion des Enzyms P450 ist die Katalyse der Hydroxylierung und nicht einer normalerweise stattfindenden Phosporylierung. Die Hydroxylierung erhöht die Löslichkeit fremder Substanzen (xenobiotische Verbindungen) und erleichtert dadurch deren Ausscheidung. Generell bedingt die Einführung von Hydroxylgruppen beispielsweise in einem auf andere Weise nicht zu entgiftenden polyzyklischen aromatischen Kohlenwasserstoff dessen Konjugation mit stark polaren Stoffen, was die Löslichkeit des modifizierten aromatischen Moleküls beträchtlich steigert.

Die zentrale Bedeutung der Leber bei der Verstoffwechselung aller Substanzen, die der Mensch aufnimmt, wurde bereits vor langer Zeit erkannt. Von besonderer Bedeutung ist der Lebermetabolismus für das Auffinden bisher unbekannter therapeutisch wirksamer Substanzen und für die damit verbundene Entwicklung neuer Medikamente.

Ein derzeit etablierter Versuchsprozess zur Entwicklung eines neuen Medikamentes beginnt nach der Identifizierung einer vielversprechenden Substanz in Zellkultur-Versuchen und an isolierten Organen von Mäusen und Ratten. In einem zweiten Schritt werden diese in vitro Daten im Tierversuch, zunächst an immunsupprimierten, später auch an immunkompetenten Labormäusen und -ratten kontrolliert, um die pharmazeutische und pharmakologische Wirksamkeit der Substanz zu bestimmen. So werden erste Ergebnisse über die Verstoffwechselung und Wirkung der Substanz erzielt, deren direkte Übertragbarkeit auf den Menschen jedoch nicht gegeben ist. Bei erfolgreichem Abschluss dieser Versuche erfolgt anschließend die klinische Erprobung am Menschen. Wird hierbei eine fehlende Wirkung oder eine unerwünschte Nebenwirkung erkannt, wird die Substanz normalerweise nicht weiterverfolgt, mit allen sich daraus ergebenden finanziellen und forschungstechnischen Nachteilen. Deshalb ist die Verbesserung der Kultivierungstechniken humaner Leberzellen neben dem großen Anwendungsbereich solcher Kulturen bei der Transplantation oder Implantation in vivo, gerade für das Screening von zytotoxischen und pharmazeutisch wirksamen Verbindungen von entscheidender Bedeutung.

Experimentelle Ansätze zur Durchführung von humanen Leberzellkulturen sind im Stand der Technik bekannt. Schon sehr früh zeigte sich, dass humane Leberzellen sehr viel schwieriger in Zellkultur zu halten waren als andere Zelltypen, beispielsweise Fibroblasten. Hepatozyten besaßen in Zellkultur nur eine sehr begrenzte Lebenszeit, und sie verloren ihre natürlichen enzymatischen Funktionen mit zunehmender Zellkulturdauer sehr schnell.

Deshalb wurde versucht, diese Nachteile bei der Langzeitkultivierung von humanen Hepatozyten durch Verwendung von Zellkulturmedien zu überwinden, welche mit Hormonen oder Dimethylsulfoxid (DMSO), einer leicht membrangängigen Substanz, supplementiert waren. Die Hepatozyten wurden in diesen Systemen entweder als Flüssigzellkultur (Suspensionskultur) gehalten oder aber als Einschicht-Zellkultur (monolayer culture). Während die Zellen bei der Suspensionskultur ohne Kontakt zueinander nur im Zellkulturmedium schwimmen, haften sie bei der Monolayer-Kultur auf dem Boden von Plastik-Zellkulturschalen, wodurch sie mit Nachbarzellen in Kontakt treten können.

Als besonders nachteilig stellte sich bei diesen Zellkulturverfahren heraus, dass menschliche Hepatozyten nur für einen sehr kurzen Zeitraum aktive Zellfunktion zeigten, obwohl sich die Produktion von leberspezifischem Albumin und Cytochrom P450 über diesen Zeitraum hinaus verlängern ließ, wenn die Hepatozyten mit extrazellulären Matrixbestandteilen kokultiviert wurden. In flüssiger Zellkultur nahm aber dennoch die Fähigkeit der Hepatozyten, induzierbare Mengen an Cytochrom P450 Aktivität zu produzieren mit der Zeit stark ab. Außerdem war die Zellkulturdauer auf die ersten 24-48 h der in vitro Kultivierungszeit begrenzt. Die Überlebenszeit von Hepatozyten, die als Monolayer-Kulturen angezogen waren, konnte gegenüber den Suspensionskulturen etwas verlängert werden, jedoch verloren auch sie ihre leberzell-spezifischen Funktionen mit steigender Dauer der Zellkultur.

Damit wiesen diese etablierten Standardkulturtechniken alle den entscheidenden Nachteil auf, dass sie die natürlichen Lebensbedingungen von Hepatozyten nicht ausreichend nachahmen konnten. Innerhalb der menschlichen Leber zeigen Hepatozyten eine polare Orientierung, wobei die Richtungen "oben" und "unten" jeweils durch die weiteren, die einzelnen Hepatozyten umgebenden Zellen bestimmt werden. In einem nächsten Schritt wurden daher vorwiegend aus tierischen Lebern isolierte Hepatozyten auf einer Kollagenmatrix, die den natürlichen Nährboden simulieren sollte, bzw. eingebettet zwischen zwei Schichten von Kollagenmatrices (Sandwich-Technik) kultiviert. Anschließend wurde eine große Anzahl von leberspezifischen Funktionen zwischen den unterschiedlich kultivierten Hepatozyten bestimmt und verglichen. Je länger die Hepatozyten leberspezifische Proteine synthetisieren konnten und dadurch nativen Hepatozyten zumindest ähnlich waren, als desto erfolgreicher wurde die Kultivierungstechnik erachtet. Hepatozyten, die unter Verwendung der Sandwich-Technik kultiviert wurden, entsprachen in ihren biochemischen Syntheseprozessen für ca. zwei bis vier Wochen weitestgehend frisch isolierten Hepatozyten. Sie produzierten physiologischen Menge an Albumin, Transferrin, Fibrinogen, Gallensalze und Harnstoff. Im Gegensatz dazu zeigten Hepatozyten, die nur auf einer einzigen Kollagenschicht kultiviert wurden, bereits nach ca. ein bis zwei Wochen eine deutliche Reduktion leberspezifischer Proteinbiosynthesen. Nur Hepatozyten, die in einer Zwei-Schicht-Kollagenmatrix kultiviert wurden, konnten eine Vielzahl von extrazellulären Matrixproteinen einschließlich Fibronectin, Laminin und Type IV Kollagen synthetisieren. Diese Proteine umgeben die Hepatozyten und bilden ein Netzwerk, das als extrazellulärer Raum wirkt und ihrer längeren Lebensfähigkeit in Zellkultur dient.

Als besonders wesentlich für den Erhalt leberspezifischer Funktionen von in vitro kultivierten Zellen wurde die Transkription von leberspezifischen Genen erkannt. Die Syntheserate von Albumin mRNA und die Translationsrate von Albumin mRNA in Protein wurden zwischen den unterschiedlich kultivierten Hepatozyten verglichen, wobei auch bei diesen versuchen die Hepatozyten aus der Zwei-Schicht-Kollagenmatrix signifikant höhere Werte erzielen konnten.

Es sind verschiedene Konservierungslösungen bekannt, die die Zersetzungsprozesse in konservierten Zellen oder Geweben einschränken sollen. So sind Lösungen beschrieben, die Agenzien aufweisen, die direkt die Apoptose hemmen - wie z.B. Zn²⁻ - oder die die Radikalbildung durch Zugabe von Vitamin E hemmen. Weiterhin sind zahlreiche Konservierungslösungen bekannt, die osmotisch aktive Substanzen, wie Stärke oder Polyethylenglykol, aufweisen.

Derartige Agenzien wirken jedoch auf verschiedene Stoffwechselvorgänge in den Zellen; so modulieren beispielsweise Zn-Ionen immunologische Prozesse in Zellen und Organen. Insbesondere wenn die in den Lösungen gelagerten Organe als Spenderzellen oder - organe in Empfänger eingebracht werden sollen, kann es zu nicht gewünschten Reaktionen kommen. Die Verwendung von osmotisch aktiven Substanzen ermöglicht weiterhin auch nur eine Konservierung der Zellen oder Organe über einen kurzen Zeitraum.

Weiterhin sind verschiedene Taxol- oder Polyethylenglycol (PEG)-haltige Lösungen zur Lagerung von Organen bekannt, so offenbart die WO 00/69259 eine wässrige Lösung, die im wesentlichen PEG und Calcium umfasst, und in der EP 0806140 B1 wird eine Zusammensetzung beschrieben, die vor allem Taxol und Calcium enthält. Hierbei werden insbesondere die Eigenschaften von Calcium, PEG oder Taxol genutzt, Organellen strukturelle Stabilität zu verleihen.

Dennoch weisen Taxol- und PEG-haltige Lösungen, die häufig auch Calcium-Ionen enthalten, mehrere Nachteile auf. Taxol hemmt über einen Angriff an die Mikrotubuli die Zellteilung, wodurch der Metabolismus des Organs nachteilig beeinträchtigt wird. PEG verändert schon in geringsten Mengen die Viskosität des Mediums und setzt den Reibungswiderstand (Toms-Effekt) herab und beeinflusst so das Flüssigkeitsgleichgewicht in den Organen nachteilig. Calcium dient in tierischen Zellen als sekundärer Botenstoff und fördert über verschiedene biochemische Zyklen die Phosphorylierung von Proteinen; außerdem ist Calcium auch in der Lage viele Proteine direkt zu aktivieren. Die Kombination von Taxol oder PEG mit Calcium führt dazu, dass zahlreiche biochemische und immunologische Reaktionen ablaufen, die die weitere Verwendung der Organe und/oder Zellen beeinträchtigen können. Organe, die in solchen Lösungen gelagert werden, verändern daher - durch das Zusammenwirken der Komponenten - ihren biochemischen Status und es kann nicht ausgeschlossen werden, dass immunologische Prozesse initiiert werden, die eine Transplantation des Organs oder der Zellen nachteilig beeinflussen.

Im Rahmen des bisherig nur in Einzelfällen eingesetzten Konservierungsverfahrens der hypothermen Lagerung von Leberzellen, vor allem von Rattenleberzellen, Schweineleberzellen und menschlichen Leberzellen, wurde bisher auf eine für die Lebertransplantation entwickelte Konservierungslösung "University of Wisconsin Solution" (UW) zurückgegriffen (Zusammensetzung: 25 mmol/l KH₂PO₄, 100 mmol/l Lactobionsäure, 5 mol/l MgSO₄, 5 mol/l Adenosin, 1 mM Allopurinol, 3 mmol/l Glutathion, 30 mmol/l Raffinose, 0,1 g/l Penicillin und 0,1 g/l Streptomycin, 100 U Insulin, 8 mg/l -Dexamethason, 0,5 ml/l Bactrim, 50 g Hydroxyethylstärke MW 200 - 300 Da).

Der hohe Preis der "University of Wisconsin Solution" und die zahlreichen, aufeinander abzustimmenden Reagenzien sind jedoch nachteilig. Weiterhin ist die Überlebensrate der Leberzellen in der Lösung sehr gering und wichtige leberspezifische Eigenschaften der Zellen gehen in der Lösung verloren, beispielsweise können wichtige hepatozelluläre Funktionen der Zellen in der Lösung nicht erhalten werden.

Diese Konservierungslösung wurde speziell für die im Rahmen der Organentnahme und in-situ-Perfusion von Leber, Niere und Pankreas im Rahmen einer Explantation entwickelt. Im Vordergrund bei der Organkonservierung steht die Vermeidung von Endothelzellschäden sowie der Erhalt des Organverbundes. Diese Lösung ist daher nicht geeignet, für die spezielle Fragestellung der Konservierung von bereits isolierten Zellsuspensionen, insbesondere primärer menschlicher Leberzellen.

Bekannt ist weiterhin eine vereinfachte UW-Konservierungslösung für Schweinehepatozyten. Vergleichende Untersuchungen werden beschrieben, die mit der UW-Lösung, der vereinfachten UW-Lösung und dem bekannten Leibovitz L-15-Medium gemacht wurden. Dabei wurde festgestellt, dass sowohl UW-Lösung als auch vereinfachte UW-Lösung dem Leibovitzmedium + 5% PEG hinsichtlich eines Schutzes der morphologischen Struktur und der Funktion der Hepatozyten überlegen sind (S. A .Pahernik et al.: Hypothermic Storage of Pig Hepatocytes: Influence of Different Storage Solutions and Cell Density. In: Cryobiology, 1996, S. 552-566).

Diane C. Marsh et al.: Hypothermic Preservation of Hepatocytes. In: Cryobiology, 1990, S. 1-8 beschreiben die Verwendung von Leibovitz L-15-Medium bzw. Varianten dieses Mediums. Neben einer großen Anzahl an Komponenten enthält dieses Medium ein Aminosäuregemisch mit 17 Aminosäuren (darunter Glycin) und CaCl₂. Die Autoren vertreten die Ansicht, dass die Kombination von divalenten Ionen (Ca/Mg-Ionen) im Gemisch mit zahlreichen Aminosäuren der wesentliche Faktor für die Verbesserung der Zelllebensfähigkeit zu sein scheint.

Der Zusatz von Fructose und Glucose gemeinsam als glykolitische Substrate zu einer UW-Lösung wird von P. Dutkowski et al.: Leberstoffwechsel während kalter ischämischer Inkubation in UW-Lösung am Rattenmodell. In: Langenbecks Arch.Chir (1997) 382: 343-348 empfohlen, wodurch die Laktoseproduktion für 96 Stunden aufrecht erhalten und die Zelltod-Rate reduziert wird. Diese Zusätze führten zu einer wesentlich verlängerten Zellüberlebenszeit, signifikant erniedrigtem Glykogenverbrauch und signifikant höherem ATP-Gehalt.

Alle für isolierte Hepatozyten beschriebenen Kultivierungstechniken erlauben zwar für eine begrenzte Zeit deren Passagierung in vitro, jedoch können mit Hilfe dieser Techniken frisch aus der Leber isolierte Zellen nicht dauerhaft haltbar gemacht werden. Gerade für die dauerhafte Konservierung über mehrere Monate oder den Transport von Leberzellkulturen erweisen sich die beschriebenen Techniken als besonders ungeeignet. Hepatozyten, die in Zellkulturflaschen bzw. -schalen kultiviert werden, benötigen für ihre Erhaltung und ihr Wachstum jeden Tag den Wechsel des Zellkulturmediums, wodurch abgestorbene Zellen entfernt werden. Diese toten Zellen setzen bei ihrem Zerfall giftige Stoffe frei, die sich bei Ausbleiben des Mediumwechsels in der

Kulturschale anreichern und ihrerseits toxisch auf noch lebende Hepatozyten wirken. Dadurch würde das Absterben der gesamten Zellkultur sehr schnell voranschreiten. Weiterhin benötigen kultivierte Hepatozyten Temperaturen von ca. 37° C sowie eine sie umgebende 5 %ige Kohlendioxid- und 21 %ige Sauerstoff-Atmosphäre, damit ihre Lebensfähigkeit zumindest für einige Zeit gewährleistet werden kann. Diese speziellen Umgebungsparameter können nur in einem Inkubator aufrecht erhalten werden, dessen Einsatz sich aber beim Transport als nicht praktikabel erweist.

Um diese genannten Nachteile zu überwinden und Hepatozyten lager- und transportfähig zu machen, wurden sie direkt nach ihrer Isolierung aus der Leber mit Glycerin oder DMSO versetzt und in sehr kleinen Plastikgefäßen (cryotubes, freezing vials) entweder in flüssigem Stickstoff oder auf Trockeneis tiefgefroren und anschließend bei -80° C gelagert. Obwohl kryokonservierte Hepatozyten ohne Zweifel gut transportiert und auch über einen langen Zeitraum im tiefgefrorenen Zustand aufbewahrt werden können, erwiesen sie sich größtenteils nach dem Auftauen als nicht lebensfähig und insofern wertlos. Verbleibende Hepatozyten, die nach dem Auftauen wieder in Zellkultur anwuchsen, waren zudem für viele Einsatzbereiche nicht mehr geeignet. So wurde beschrieben, dass sie ihre leberspezifischen Funktionen, wie beispielsweise Kapazitäten zur Verstoffwechselung, nahezu vollständig verlieren und daher für die Untersuchung des Leberzellmetabolismus und der Umsetzung pharmazeutisch aktiver Substanzen nur noch sehr eingeschränkt bzw. gar nicht mehr verwendet werden können.

Besonders nachteilig hat sich bei kryokonservierten Hepatozyten erwiesen, dass nach dem Auftauen nur noch weniger als 20% der Zellen lebensfähig sind. Diese Werte wurden mittels standardisierter Trypanblau-Färbung bestimmt(Vitalitätsbestimmung). Beim Einfrieren bilden sich durch den hohen Flüssigkeitsgehalt der Zellen in den einzelnen Hepatozyten Eiskristalle, die aufgrund ihrer großenräumlichen Struktur zur Zerstörung der empfindlichen Zellmembran und damit zum Tod der Zelle führen. Weiterhin verringert sich die Zahl der nach Kryokonservierung noch lebensfähigen Hepatozyten zusätzlich durch den Vorgang des Auftauens, der, bevor die Hepatozyten wieder in Kultur genommen werden können, sehr schnell bei 37° C erfolgen muss. Der beim Einfrieren verwendete Zusatzstoff DMSO, der durch seine Membranpermeabilität teilweise das Platzen und Auffieren der einzelnen Zellen verhindert, wirkt bei Temperaturen um 37° C aufgrund seiner hohen Konzentration toxisch auf die Hepatozyten, so dass dadurch die Zahl der abgestorbenen Zellen zusätzlich erhöht wird.

Der vorliegenden Erfindung liegt daher die Aufgabe zu Grunde, eine Lösung zur Konservierung menschlicher Hepatozyten zur Verfügung zu stellen, in der die isolierten Zellen in nativem Zustand mit einer hohen Überlebensrate erhalten werden, so daß sie ihre leberspezifischen Funktionen bewahren und daher für die Identifizierung von leberaktiven Substanzen verwendet werden können.

Es wurde nun überraschenderweise gefunden, daß frisch isolierte Hepatozyten, die bei 4°C konserviert werden, nach dem Ausbringen in Zellkulturmedium eine erhöhte Überlebensrate gegenüber kryokonservierten Hepatozyten aufweisen und ihre leberspezifischen Eigenschaften bei der Verstoffwechselung erhalten bleiben, so daß sie vollständig frisch isolierter Hepatozyten entsprechen.

Ein Gegenstand der vorliegenden Erfindung ist daher eine Lösung zur Konservierung menschlicher Leberzellen, welche Natriumlaktobionat, Kalium-Hydrogen-Phosphat, Magnesiumsulfat, Raffinose und Glutathion sowie Fructose, Adenosin und Glycin als Bestandteile aufweist.
Als wesentlich für die Kultivierung primärer menschlicher Leberzellen hat sich die Zugabe von Fructose, Adenosin und Glycin zur längeren Konservierung erwiesen.
Bei Konservierung menschlicher Hepatozyten in der erfindungsgemäßen Lösung waren durchschnittlich 60% der Leberzellen nach 48 h Konservierungszeit lebensfähig und zeigten leberzell-spezifische Funktionen, die mit frisch isolierten Hepatozyten vergleichbar waren.
Vorteilhafterweise erlaubt es die erfindungsgemäße Lösung auch, dass die Zellen in ca. 80% der Fälle nicht durch eine Dichtegradienten-Zentrifugation aufgereinigt werden müssen, und es somit z.B. nicht zu dem Zellverlust von ca. 80-90% wie während einer Percoll-Aufreinigung kommt.
In einer bevorzugten Ausführungsform weist die erfindungsgemäße Lösung 50 - 200 mM Natriumlaktobionat, 20 - 40 mM Kalium-Hydrogen-Phosphat, 2 - 10 mM Magnesiumsulfat, 10 - 40 mM Raffinose und 1 - 5 mM Glutathion.
In einer weiteren bevorzugten Ausführungsform weist die erfindungsgemäße Lösung zur Konservierung menschlicher Leberzellen 80 - 150 mM, Natriumlaktobionat, 20 - 35 mM, Kalium-Hydrogen-Phosphat, 4 - 8 mM Magnesiumsulfat, 20 - 40 mM Raffinose, 2 - 4 mM Glutathion auf. Bei Lagerung menschlicher Hepatozyten in einer erfindungsgemäßen Konservierungslösung dieser Zusammensetzung waren nach 48 h Konservierungszeit durchschnittlich 60 - 70 % der Leberzellen lebensfähig, und sie zeigten leberzellspezifische Funktionen, die mit frisch isolierten Hepatozyten vergleichbar waren.

In einer besonders bevorzugten Ausführungsform weist die erfindungsgemäße Lösung zur Konservierung menschlicher Leberzellen 100 mM Natriumlaktobionat, 25 mM Kalium-Hydrogen-Phosphat, 5 mM Magnesiumsulfat, 30 mM Raffinose 3 mM Glutathion auf. Diese Zusammensetzung der erfindungsgemäßen Lösung besitzt den besonderen Vorteil, daß Hepatozyten nach 48 h Konservierungszeit eine Vitalitätsrate von > 70% aufwiesen, ihre leberzell-spezifischen Funktionen mit frisch isolierten Hepatozyten vergleichbar waren und sie in dem beschriebenen Kulturmodell regenerierbar waren.

In einer weiteren bevorzugten Ausführungsform der Erfindung ist zusätzlich Calciumchlorid enthalten.

Fructose kann im Bereich von 1 mM bis 10 mM zugesetzt werden, Calciumchlorid im Bereich von 1,5 mM bis 3 mM, Glycin im Bereich von 1,5 mM bis 4,5 mM, insbesondere 3 mM und Adenosin im Bereich von 1 bis 3 mM.

Eine konservierte menschliche Leberzelle wird aus Lebergewebe nach einem Verfahren das die folgenden Schritte aufweist hergestellt:
(i) Isolieren von mindestens einer menschlichen Leberzelle aus Lebergewebe;
(ii) gegebenenfalls Waschen der isolierten Leberzelle in der erfindungsgemäßen Konservierungslösung;
(iii) Konservieren der isolierten Leberzelle in der Konservierungslösung und
(iv) Reoxigenierung der isolierten Leberzelle.

Der Reoxigenierung schließt sich insbesondere eine Kultivierung in protektiven Medien an. Dem Fachmann ist die Zusammensetzung von protektiven Medien bekannt.

Ein weiterer Gegenstand der vorliegenden Erfindung ist ein Verfahren zur Herstellung einer konservierten menschlichen Leberzelle, dadurch gekennzeichnet, daß das Verfahren folgende Schritte aufweist:
(i) Isolierung von mindestens einer menschlichen Leberzelle aus Lebergewebe;
(ii) gegebenenfalls Waschen der isolierten Leberzelle in der erfindungsgemäßen Konservierungslösung;
(iii) Konservieren der isolierten Leberzelle in der Konservierungslösung und
(iv) Reoxigenierung der isolierten Leberzelle.

Die menschlichen Leberzellen können vorteilhafterweise nach der Reoxigenierung in dem protektiven Medium kultiviert werden, wobei dem Fachmann die Zusammensetzung der protektiven Medien bekannt ist.

In einer besonderen Ausführungsform der Erfindung ist vorgesehen, die Leberzellen in der Konservierungsphase in der Konservierungslösung sauerstofffrei zu machen, insbesondere in dem sie mit Helium begast werden. Durch die Heliumbegasung wird die Zellsuspension frei von gelöstem Sauerstoff, wodurch ein verbesserter Vitalitätserhalt während der Konservierungsphase ermöglicht wird. Alternativ ist es auch möglich, die Zellkultur mit anderen Schutzgasen zu inkubieren, wobei Schutzgase im Sinne der Erfindung alle Gase sind, die die Oxidation oder Nitrid-Bildung im Gewebe oder in den Zellen verhindern, z.B. wie Argon.

Die konservierte Leberzelle kann insbesondere dadurch hergestellt werden, daß die Ausgangszellen aus gesundem menschlichen Lebergewebe isoliert werden. Im Sinne der vorliegenden Erfindung wird unter dem Begriff "gesundes Lebergewebe" menschliches Lebergewebe verstanden, welches nicht krankhaft verändert ist. Insbesondere wird darunter Lebergewebe verstanden, das bei einer, aufgrund beliebiger Ursache durchzuführenden Leberresektion in den Randbereichen, nahe der chirurgischen Schnittzone, entfernt wird. Um die pathologische Unauffälligkeit des Lebergewebes sicherzustellen, kann der Fachmann histologische Untersuchungen oder Zellfärbungen mit bekannten Farbstoffen (Bromthymol-Blau; Cyanofarbstoffe) durchführen.

In einer alternativen Ausführungsform kann die konservierte Leberzelle dadurch hergestellt werden, daß die Ausgangszellen aus erkranktem menschlichen Lebergewebe isoliert werden. Im Sinne der vorliegenden Erfindung wird daher unter dem Begriff "erkranktes Lebergewebe" jedes menschliches Lebergewebe verstanden, welches aufgrund von pathologischen Veränderungen dem Menschen entnommen werden muß, um den gesamten Organismus vor einer weiteren Schädigung zu bewahren. Insbesondere fällt unter diesen Begriff zirrhotisches Lebergewebe, von Primärtumoren oder Metastasen befallenes Lebergewebe und Gewebe einer nektrotischen Leber.

Die Konservierung mit der erfindungsgemäßen Konservierungslösung kann von 37°C bis 0°C vorgenommen werden. Es kann vorteilhaft sein, in der Anheftungsphase die konservierten Zellen unter einem erhöhten Sauerstoffpartialdruck, insbesondere zwischen 30% bis 50% Sauerstoff in der Gasphase, zu kultivieren. Das Attachment war bei konservierten Leberzellen unter 40% O₂ um 30-50% höher als bei Zellen, die unter konventionellen Kulturbedingungen mit 21% O₂ kultiviert wurden. Insbesondere konnte gezeigt werden, daß bei Verzicht auf die Kultivierung mit dem Reoxigenierungsmedium unter 40 % Sauerstoff ein deutlich erhöhter Zellschaden im Sinne einer Sauerstoffradikal-vermittelten Schädigung auftritt. Das heißt, daß konservierte Leberzellen vor allem durch die Kombination von erhöhtem O₂-Partialdruck (40%) und Reoxigenierungsmedium hinsichtlich des Attachments und der Zellfunktion profitieren.

Es ist besonders vorteilhaft, wenn das erfindungsgemäße Verfahren zur Konservierung der Leberzellen bei 0°C-10°C, insbesondere bei 4°C, durchgeführt wird. Die erfindungsgemäße Konservierungslösung kann, bevor sie mit den zu konservierenden Leberzellen in Kontakt gebracht wird, auf 4°C abgekühlt werden. Bei dieser vorteilhaften Temperatur sind alle physiologischen Vorgänge der konservierten Leberzellen stark eingeschränkt und finden nur verlangsamt statt, ohne daß aber die gelagerten Zellen aufgrund einer Kristallbildung, wie bei der bereits beschriebenen Kryokonservierung, zerstört werden. Besonders vorteilhaft ist es, während der Anheftungsphase der Zellen in der Gasphase einen erhöhten Sauerstoffpartialdruck von zwischen 30% bis 50% Sauerstoff zu wählen. Nach Anheftung und Konservierung der Zellen kann es vorteilhaft sein, diese in der Konservierungsphase suerstofffrei zu machen.

Nach erfolgter Konservierung werden die Leberzellen in einem Reoxigenierungsmedium erwärmt. Während der Erwärmungsphase von 4°C auf ca. 25°C bis 37°C müssen die Zellen oder Zellverbände wieder mit Sauerstoff versorgt werden, ohne dass sie durch Oxidationsvorgänge nachteilig beeinflußt oder auch zerstört werden.

Die Reoxigenierung ist insbesondere vorteilhfat, wenn die Zellen in einer sauerstoffarmen oder sauerstofffreien Atmosphäre konserviert wurden, um so den Zellen für bestimmte Verwendungen, wie der Testung von leberaktiven Substanzen, Sauerstoff zuzuführen. Damit die Sauerstoffzufuhr ohne schädigende Oxidationsprozesse abläuft, kann sie z.B. in einem Reoxigenierungsmedium erfolgen. Vorteilhaft ist es, dass zur Reoxigenierung ein Reoxigenierungsmedium eingesetzt wird, das Sauerstoff-Radikalfänger und/oder Membranstabilisatoren aufweist. Als Sauerstoff-Radikalfänger können insbesondere Deferoxamine, Dithiothreitol, Trolox, Tocopherol und/oder Dimethylthiourea verwendet werden. Membranstabilisatoren sind beispielsweise zweiwertige Kationen wie Mg²⁺, Ca²⁺ und andere.

Es ist auch möglich, zur Reoxigenierung nach einer erfindungsgemäßen Kältekonservierung bei +4° C ein übliches Waschmedium einzusetzen. Die Durchführung einer Reoxigenierung ist dem Fachmann an sich bekannt.

Nach der Reoxigenierung können die Zellen vor der Weiterkultivierung in geeigneten Rekultivierungslösungen gewaschen werden, z.B. in DMEM.

Die Waschlösungen und Rekultivierungslösungen müssen auf die Wiedererwärmung hin abgestimmt werden. Für die Waschlösung nach Konservierung hat sich der Zusatz von Glutathion (GSH) beispielsweise in einer Konzentration von 3mM bei einem pH von 7,2 als vorteilhaft für den Zellerhalt erwiesen. Für das Reoxigenierungsmedium hat sich neben dem Zusatz von Sauerstoffradikalfängern - wie auch bei der Konservierungslösung - auch die Zugabe von Methionin beispielsweise in einer Konzentration von 1 mM als vorteilhaft für die Verbesserung der Zellkultur nach Konservierung gezeigt.

Besonders vorteilhaft ist es, die Wiedererwärmung in einem Reoxigenierungsmedium durchzuführen, das vor allem in einem Zeitraum von 4 Stunden während der Anheftungsphase der Zellen in der Kultur mit Vorteil angewendet werden kann.

Ein Verfahren zum Nachweis oder zur Identifizierung einer oder mehrerer leberaktiver Substanzen, das nicht Gegenstand der vorliegenden Erfindung ist, ist dadurch gekennzeichnet, daß es folgende Schritte aufweist:
(i) Bereitstellen mindestens einer menschlichen Leberzelle;
(ii) In-Kontakt-Bringen der Leberzelle mit einer oder mehreren Prüfsubstanzen; und
(iii) Nachweis oder Identifizierung einer oder mehrerer leberaktiver Substanzen durch Bestimmen der Cytochrom P450 Aktivität.

Unter dem Begriff "Prüfsubstanzen" sind alle diejenigen Moleküle, Verbindungen und/oder Zusammensetzungen und Stoffgemische zu verstehen, die mit der Leberzelle unter geeigneten Bedingungen in Wechselwirkung treten können. Mögliche Prüfsubstanzen sind niedermolekulare, organische oder anorganische Moleküle oder Verbindungen, vorzugsweise Moleküle oder Verbindungen mit einer relativen Molmasse bis ca. 1.000, insbesondere von ca. 500.

Prüfsubstanzen können weiterhin auch natürliche und synthetische Peptide, beispielsweise Peptide mit einer relativen Molmasse bis ca. 1.000, insbesondere bis ca. 500, sowie Proteine, beispielsweise Proteine mit einer relative Molmasse von Größer als 1.000, insbesondere größer als ca. 10.000, oder Komplexe davon umfassen.

Ebenfalls unter diesen Begriff fallen Kinase-Inhibitoren, Phosphatase-Inhibitoren und deren Derivate. Die Prüfsubstanzen können aufgrund ihrer Wechselwirkung die mit inhärenten Bestandteilen der erfindungsgemäßen Leberzelle zu einer Veränderung der Cytochrom P450 Aktivität führen. Dabei kann die Enzymaktivität des Cytochroms P450 insbesondere sowohl erhöht als auch erniedrigt werden.

Konservierte menschliche Leberzellen können zum Nachweis oder zur Identifizierung einer oder mehrerer leberaktiver Substanzen verwendet werden.

Ein geeignetes Testsystem zur Identifizierung von Prüfsubstanzen basiert auf der Identifikation funktioneller Interaktionen mit dem Hefe "Two-Hybrid"-System. Bei diesem Test werden Hefezellen mit einem Expressionsvektor transformiert, der für ein Fusionsprotein bestehend aus einem leberspezifischen Protein, beispielsweise Albumin und der DNA-Bindungsdomäne eines Transkriptionsfaktors wie beispielsweise Gal4 oder LexA besteht. Die transformierten Zellen enthalten außerdem ein Reportergen, dessen Promotor Bindungsstellen für die entsprechende DNA Bindungsdomäne enthalten. Durch Transformation eines weiteren Expressionsvektors, der ein zweites Fusionsprotein aus einem bekannten oder unbekannten Polypeptid mit einer Aktivierungsdomäne, beispielsweise von Gal4 oder Herpes Virus VP16, exprimiert, kann die Expression des Reportergens stark gesteigert werden, wenn das zweite Fusionsprotein mit dem leberspezifischen Protein funktionell interagiert. Diese Expressionssteigerung kann man ausnutzen, um neue Interaktoren zu identifizieren, beispielsweise indem man zur Konstruktion des zweiten Fusionsproteins eine cDNA-Bibliothek herstellt, die für interessierende Interaktoren kodiert.

Zudem läßt sich dieses Testsystem zum Screening von Substanzen ausnutzen, die eine Interaktion zwischen dem leberspezifischen Protein und einem funktionellen Interaktor inhibieren. Solche Substanzen verringern die Expression des Reportergens in Zellen, die Fusionsproteine des erfindungsgemäßen Polypeptids und des Interaktors exprimieren. So lassen sich schnell neue leberaktive Substanzen, die sowohl toxisch als auch pharmazeutisch wirksam sein können, identifizieren oder nachweisen.

Die nachfolgenden Figuren und Beispiele sollen die Erfindung näher erläutern, ohne sie zu beschränken. Darin zeigt:
- Fig. 1 :: die Überlebensrate (Vitalität) und die Fähigkeit von humanen Hepatozyten nach Konservierung in einem Zeitverlauf von 24 h, 48 h, 72 h und 96 h auf dem Boden der zellkulturschale anzuwachsen (attachment);
- Fig. 2:: die Aktivität von 7-Ethoxycoumarin-O-Deethylase (ECOD) und die Konjugation von Umbelliferon in humanen Hepatozyten nach Konservierung am 3. und 8. Tag, wobei die Hepatozyten am 8. Tag mit Rifampicin (RIF) und Phenobarbital (PB) induziert wurden;
- Fig. 3:: die Aktivität von 7-Ethoxyresorufin-O-Deethylase (EROD) und die Konjugation von Resorufin in humanen Hepatozyten nach Konservierung am 3 und 8. Tag, wobei die Hepatozyten am 8. Tag mit Omeprazol (OME) induziert wurden;
- Fig. 4:: die CYP 3A4 Aktivität, die durch die Hydroxylierung von 6β-OH-Testosteron in humanen Hepatozyten nach Konservierung am 3. und 8. Tag gemessen wurde, wobei die Hepatozyten am 8. Tag mit RIF und PB induziert wurden;
- Fig. 5:: die CYP 2C19 Aktivität, die durch die Hydroxylierung von Mephenytoin in humanen Hepatozyten nach Konservierung am 3. und 8. Tag gemessen wurde, wobei die Hepatozyten am 8. Tag mit RIF und PB induziert wurden;
- Fig. 6:: die CYP 2B6 Aktivität, die durch die Bildung von Nirvanol in humanen Hepatozyten nach Konservierung am 3. und 8. Tag gemessen wurde, wobei die Hepatozyten am 8. Tag mit RIF und PB induziert wurden;
- Fig. 7:: die Glucuronosyltransferase- und die Sulfotransferase-Aktivität, die durch die Konjugation von p-Nitrophenol in humanen Hepatozyten nach Konservierung am 3. und 8. Tag gemessen wurde;
- Fig. 8:: den Malondialdehyd-Gehalt von humanen Hepatozyten im Zeitverlauf der Konservierung bis 72 h;
- Fig. 9:: die Albuminsekretion von nicht aufgereinigten humanen Hepatozyten im Zeitverlauf der Konservierung über 14 d;
- Fig. 10:: die Albuminsekretion von aufgereinigten humanen Hepatozyten im Zeitverlauf der Konservierung über 14 d.

### Beispiele:

### 1. Isolierung menschlicher Leberzellen

Menschliche Leberzellen wurden aus Lebergewebe (Leberresektat von Patienten (43 + 34 g n=129)) mittels modifizierter EGTA/Kollagenase Perfusionstechnik gewonnen (Koebe et al. (1995) Asaio Journal 41:189). Nach der chirurgischen Entfernung des Lebergewebes aus dem Patienten wurde das Resektat zunächst gewogen. Anschließend wurde es mittels einem, dem Fachmann bekannten Standardpuffer, beispielsweise Krebs-Ringer-Puffer (KBR), in einer herkömmlichen Perfusionsanlage durchspült (perfundiert), um vor allem Blut aus dem Lebergewebe zu entfernen. In einem zweiten Reinigungsschritt wurde das Lebergewebe mit EGTAhaltigem KBR (1 mM EGTA) 2 bis 3 min bei 37°C perfundiert. Abschließend wurde das Lebergewebe ca. 3 bis 5 min mit Calciumchlorid-haltigem KBR (5 mM CaCl₂) unter Carbogenbegasung gespült.

Daran schloß sich ein erster enzymatischer Zerkleinerungsschritt des Lebergewebes an, der in Kollagenase-haltigem KBR (0,05 % (w/v) Kollagenase; 5 mM CaCl₂) für 10 min erfolgte. Danach wurde das bisher nur grob zerkleinerte Lebergewebe mit einem Skalpell weiter vorsichtig mechanisch zerlegt. Die erhaltene Zellsuspension wurde durch zwei Nylonnetze (21 µm, 70 µm; herkömmlich zu beziehen bei: Fa. GLW, Würzburg, Deutschland) gefiltert, wodurch Einzelzellen vom restlichen Zellverband getrennt wurden. Die isolierten Leberzellen wurden für 5 min in einem weiteren, dem Fachmann bekannten Standardpuffer, beispielsweise PBS (Phosphate buffered saline; 137 mM NaCl; 7,9 mM Na₂ HPO₄;1,5 mM KH₂PO₄; 2,7 mM KCl (pH 7, 4)) gewaschen und anschließend bei 50 x g abzentrifugiert. Der Waschvorgang wurde zweimal wiederholt. Bei Zellaktivitäten unter 70 % wurde, um die vitalen Zellen aufzureinigen, eine Dichtegradienten-Zentrifugation mit Percoll für 5 min bei 76 x g durchgeführt. Hierzu wurden 10,8 ml Percoll mit 1,2 ml 10 x BSS-Puffer (Sambrook et al. (1989) Molecular Cloning, A Laboratory Manual, Appendix B:B1-B28) und 25 ml Leberzellsuspension vermischt. Danach wurden die Leberzellen bei 4°C noch zweimal in PBS-Puffer gewaschen und bei 50 x g 5 min abzentrifugiert. Die Gesamtzahl der isolierten Leberzellen betrug dabei 8,2 x 10⁸ + 6,7 x 10⁸. Dies entspricht 20 x 10⁶ + 15 x 10⁶ Leberzellen/g Lebergewebe).

### 2. Bestimmung der Vitalitätsrate der isolierten Leberzellen und deren Konservierung bei 4°C in der erfindungsgemäßen Konservierungslösung

Die Anzahl der lebenden Leberzellen wurde mittels der, dem Fachmann bekannten Trypanblau-Färbung bestimmt und betrug 81 +/- 8,4 % (n=126) ohne Percoll-Aufreinigung und 86,7 +/- 8,2 % (n=38) mit Percoll-Aufreinigung. Zusätzlich wurde auch die Zahl der abgestorbenen Zellen nicht nur rechnerisch aus der Differenz der Gesamtzellzahl abzüglich der lebenden Zellen bestimmt, sondern durch colorimetrische Messung der Freisetzung der intrazellulären Laktatdehydrogenase (LDH) und der Aspartataminotransferase (AST). Lebende Leberzellen wurden für die weiteren Untersuchungen unmittelbar nach ihrer Isolierung in die erfindungsgemäße Konservierungslösung (pH 7,4 bei 4°C) gebracht. Die Konservierungslösung bestand aus 100 mM Natriumlaktobionat, 25 mM Kalium-Hydrogen-Phosphat, 5 mM Magnesiumsulfat, 30 mM Raffinose und 3 mM Glutathion wobei als Zusatzstoffe 3 mM Fructose, 2 mM Adenosin und 3 mM Glycin enthalten sind. Als Kontrolle wurden die Zellen in UW oder in Leibovitz L-15 (Vergleichansatz; herkömmlich zu beziehen beim : Fa. Serva Feinbiochemica, Heidelberg, Deutschland) + 5 % Polyethylenglykol (PEG) (MW 8000; herkömmlich zu beziehen bei: Fa. Sigma, Deisenhofen, Deutschland) gewaschen. Anschließend wurden die Leberzellen in O₂-dichten Glasflaschen nach Begasung mit Argon in einer Konzentration von größer 1 x 10⁷ Zellen/ml bei 4°C resuspendiert. Die Konservierungszeiten betrugen 24 h, 48 h, 72 h und 96 h ohne Umschwenken bzw. Bewegen der Zellkulturflaschen bei 4 + 0,5°C unter Luftabschluß. Nach Kältekonservierung wurden die Zellen im Waschpuffer(KRB) mit Zusatz von 3mM Glutathion (GSH) gewaschen. Anschließend erfolgte die Resuspension der konservierten Leberzellen im Reoxigenierungsmedium in einer Zellkonzentration von 0,5 x 10e6 Zellen / ml.

### 3. Reoxigenierung menschlicher Leberzellen

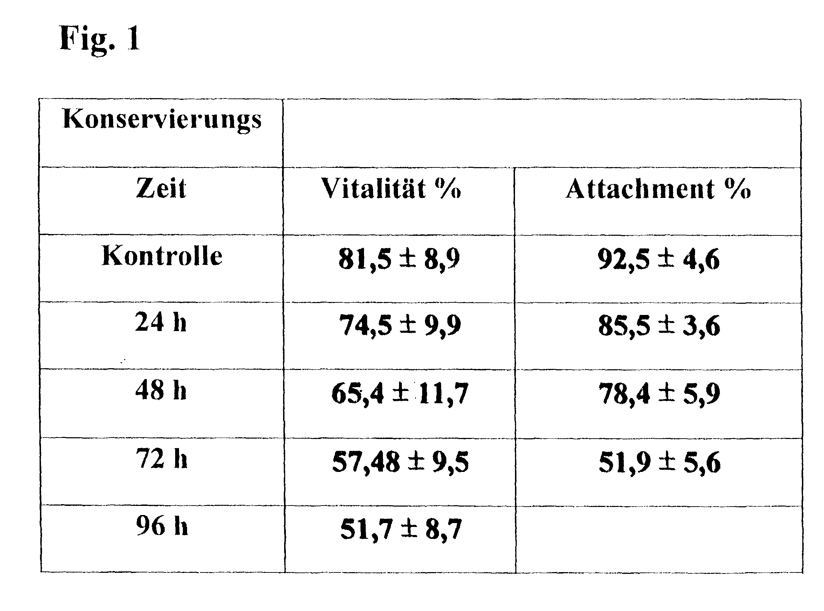

Diese Zellsuspension wurde unter 40 % 02 auf Kollagen beschichteten Zellkulturplatten für 4 h kultiviert. Neben der Morphologie wurde zusätzlich die Fähigkeit der Zellen, am Boden der Zellkulturplatten anzuwachsen, bestimmt. Die Zellen wurden lichtmikroskopisch analysiert, wobei festgestellt wurde, daß konservierte Hepatozyten, ähnlich frischen Zellen, eine ausgeprägte Fähigkeit zum Zell-Zell-Kontakt besaßen, ein klares Zytoplasma aufwiesen sowie eine typische, in vivo ähnlich frischen Zellen, eine ausgeprägte Fähigkeit zum Zell-Zell-Kontakt besaßen, ein klares Zytoplasma aufwiesen sowie eine typische, in vivo ähnliche, polymorphe, polynukleäre Struktur zeigten. Die Ergebnisse dieser Versuche sind in Fig. 1 gezeigt. Am Ende des Konservierungszeitraumes wurden die Leberzellen leicht im Reoxigenierungsmedium geschwenkt und vor Weiterkultivierung mit herkömmlichem Zellkulturmedium (Dulbecco's Modified Eagle Medium (DMEM) gewaschen.

### 4. Kultivierung menschlicher Leberzellen

Um die Differenzierungsmuster isolierter und konservierter Leberzellen möglichst lange zu erhalten, wurden die Zellen nach ihrer unter 2. beschriebenen Konservierung in einer Zweischicht-Kollagenmatrix (= Sandwich-Technik) kultiviert (Dunn et al. (1989)). Hierfür wurden Leberzellen in einer Dichte von 2 x 10⁶ Zellen in eine Schicht von Kollagen L (0,5 ml; 1,1 mg/ml) in 60 mm Zellkulturschalen mit herkömmlichem Zellkulturmedium (DMEM) überschichtet. Nach 24 h wurde der Überstand des Zellkulturmediums entfernt und eine zweite Schicht von Kollagen (0,5 ml; 1,1 mg/ml) auf die anhaftenden Leberzellen aufgebracht. Die Zellkulturen wurden danach für 30 min bei 37°C inkubiert, um ein Gelieren der Matrix zu erlauben, bevor die Leberzellen mit Zellkulturmedium überschichtet wurden. Als Zellkulturmedium wurde Phenolrot-freies DMEM verwendet, welches mit Insulin (125 mU/ml), Hydrocortison (60 ng/ml), Glucagon (10 ng/ml), Gentamycin (100 µg/ml), Penicillin (100 mU/ml) und für die ersten 24 h mit 5 % fötalem Kälberserum (FKS) versetzt war. Das Zellkulturmedium wurde täglich gewechselt, wobei nach den ersten 24 h Serum-freies Zellkulturmedium verwendet wurde.

### 5. Bestimmung der Cytochrom P450 Aktivität

Die Cytochrom P450 Aktivität in isolierten, konservierten und kultivierten menschlichen Leberzellen wurde als Maß für den Erhalt natürlicher Differenzierungsmuster und Leberzellfunktionen verwendet. Hierzu wurden Leberzellen, die nach Konservierung in der erfindungsgemäßen Konservierungslösung für 48 h nach der beschriebenen Technik angezogen wurden, mit Omeprazol (OME), Rifampicin (RIF) oder Phenobarbital (PB) stimuliert, um die Cytochrom P450 Aktivität zu induzieren. Alle Stimulanzien wurden dem Zellkulturmedium in einer Konzentration von 50 µmol/L, 100 µmol/L oder 200 µmol/L zugesetzt. Wie bereits beschrieben wurde das Zellkulturmedium täglich gewechselt.

Zur Bestimmung der Enzymaktivität wurden die Leberzellkulturen für 0,5 h mit p-Nitrophenol (10 µmol/L), für 1 h mit 7-Ethoxyresorufin (2,5 µmol/L) und Testosteron (170 µmol/L), für 2 h mit 7-Ethoxycoumarin (130 µmol/L) und für 24 h mit S-Mephenytoin (12 µmol/L) stimuliert. Mit Hilfe der "high pressure liquid chromatography" (HPLC) wurde die Aktivität verschiedener Isoenzyme des Cytochrom P450, wie beispielsweise CYP 1A2, CYP 2B6, CYP 2C19 und CYP 3A4 sowie Phase II Enzyme wie Glucuronosyltransferase (UDP-GT) und Sulfotrasferase (ST) bestimmt. Dabei wurde die CYP 1A2 assoziierte 7-Ethoxyresorufin-O-Deethylase (EROD) nach der Methode, die bei Burke et al. (1974) Drug Metab. Dispos. 2:583-588 beschrieben ist, gemessen. 7-Ethoxycourmarin-O-Deethylase (ECOD), Glucuronosyltransferase (UDP-GT) und Sulfotransferase (ST) Aktivität wurde ebenfalls nach Standardmethoden gemessen (Kern et al. (1997) Biochem. Pharmacol. 54:761-772), wobei für die beiden letztgenannten p-Nitrophenol (PNP) als Substrat verwendet wurde. Die Bestimmung der Testosterone 6β-Hydroxylierung (CYP 3A4), der S-Mephenytoin-4-Hydroxylierung (CYP 2C19) und die Bildung von Nirvanol (CYP 2B6) wurden mit Hilfe einer HPLC Gradientenelution durchgeführt.

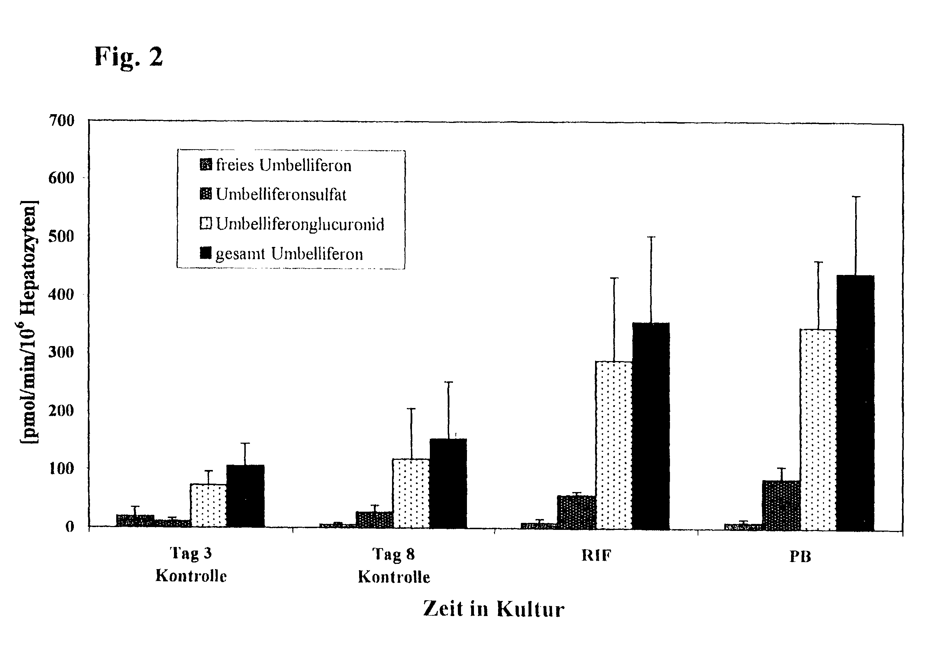

Die Ergebnisse sind in Fig. 2 bis 7 gezeigt.

Fig. 2 zeigt die ECOD Aktivität und Konjugation von Umbelliferon in humanen Hepatozyten nach Konservierung am 3. und 8. Tag, wobei die Hepatozyten am 8. Tag mit Rifampicin (RIF) und Phenobaribital (PB) induziert wurden. Die Graphik zeigt Mittelwerte aus drei Versuchen. Im Kulturverlauf der nicht-induzierten humanen Hepatozyten (Kontrolle) zeigen sich gleichbleibende metabolische Aktivitäten, die noch am 8. Kulturtag durch RIF und PB induzierbar waren.

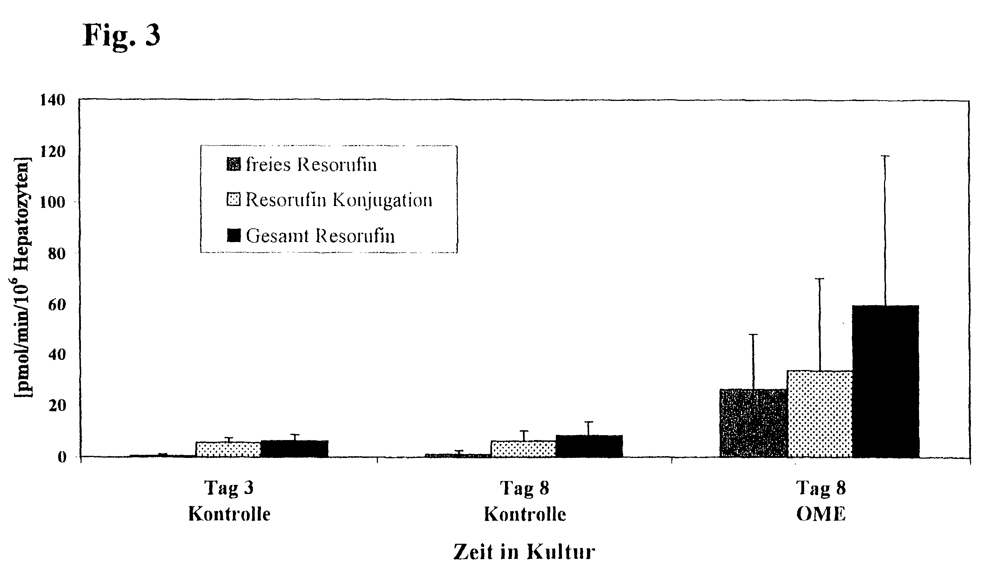

Fig. 3 zeigt die EROD Aktivität und Konjugation von Resorufin in humanen Hepatozyten nach Konservierung am 3. und 8. Tag, wobei die Hepatozyten am 8. Tag mit Omeprazol (OME) induziert wurden. Die Graphik zeigt Mittelwerte aus drei Versuchen. Im Kulturverlauf der nicht-induzierten humanen Hepatozyten (Kontrolle) zeigen sich gleichbleibende metabolische Aktivitäten, die noch am 8. Kulturtag durch OME induzierbar waren.

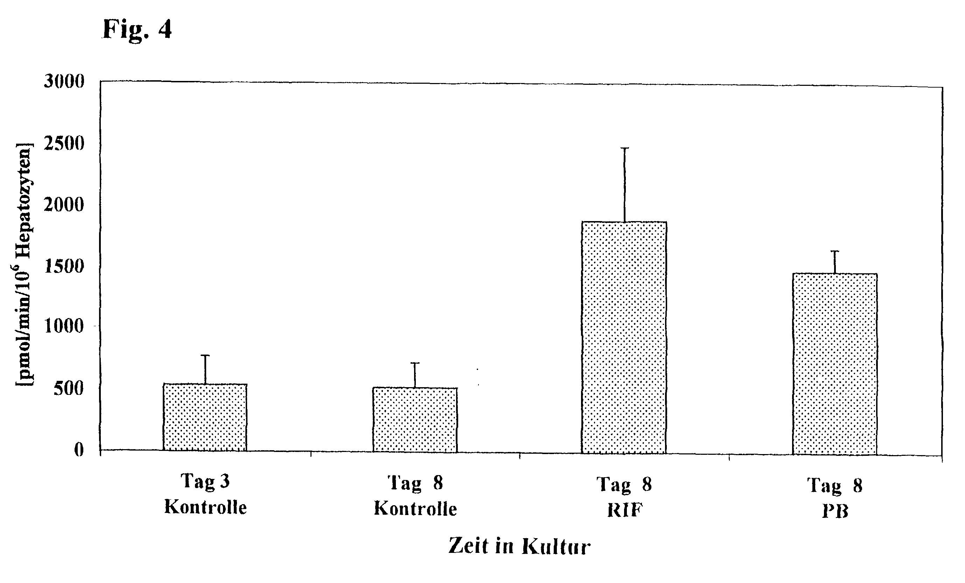

Fig. 4 zeigt die CYP 3A4 Aktivität, die durch die Hydroxylierung von 6β-OH-Testosteron in humanen Hepatozyten nach Konservierung am 3. und 8. Tag gemessen wurde. Die Graphik zeigt Mittelwerte aus fünf Versuchen. Die Hepatozyten wurden am 8. Tag durch RIF und PB stimuliert. Im Kulturverlauf der nicht-induzierten humanen Hepatozyten (Kontrolle) zeigen sich gleichbleibende metabolische Aktivitäten, die noch am 8. Kulturtag durch RIF und PB deutlich induzierbar waren.

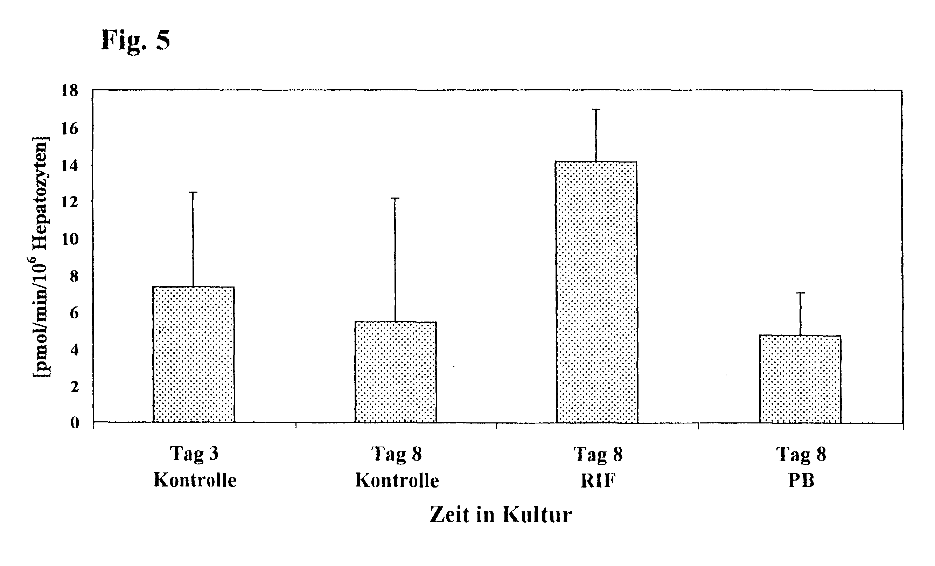

Fig. 5 zeigt die CYP 2C19 Aktivität, die durch die Hydroxylierung von Mephenytoin in humanen Hepatozyten nach Konservierung am 3. und 8. Tag gemessen wurde. Die Graphik zeigt Mittelwerte aus drei Versuchen. Die Hepatozyten wurden am 8. Tag durch RIF und PB stimuliert. Im Kulturverlauf der nicht-induzierten humanen Hepatozyten (Kontrolle) zeigt sich ein leichter Abfall der metabolischen Aktivitäten, die am 8. Kulturtag noch durch RIF, aber nicht mehr durch PB induzierbar waren.

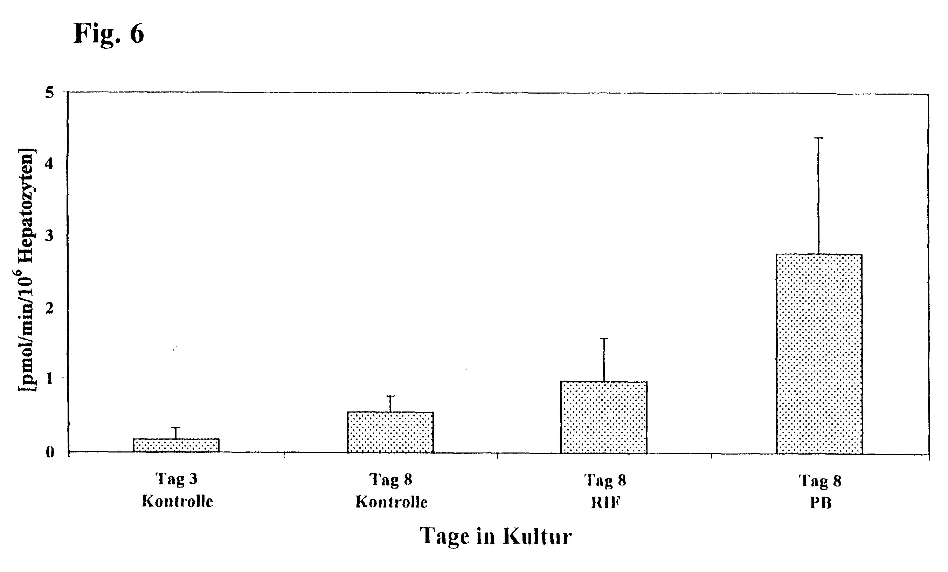

Fig. 6 zeigt die CYP 2B6 Aktivität, die durch die Bildung von Nirvanol in humanen Hepatozyten nach Konservierung am 3. und 8. Tag gemessen wurde. Die Hepatozyten wurden am 8. Tag durch RIF und PB stimuliert. Die Graphik zeigt Mittelwerte aus drei Versuchen. Im Kulturverlauf der nicht-induzierten humanen Hepatozyten (Kontrolle) zeigen sich leicht ansteigende metabolische Aktivitäten, die noch am 8. Kulturtag durch RIF und PB deutlich induzierbar waren.

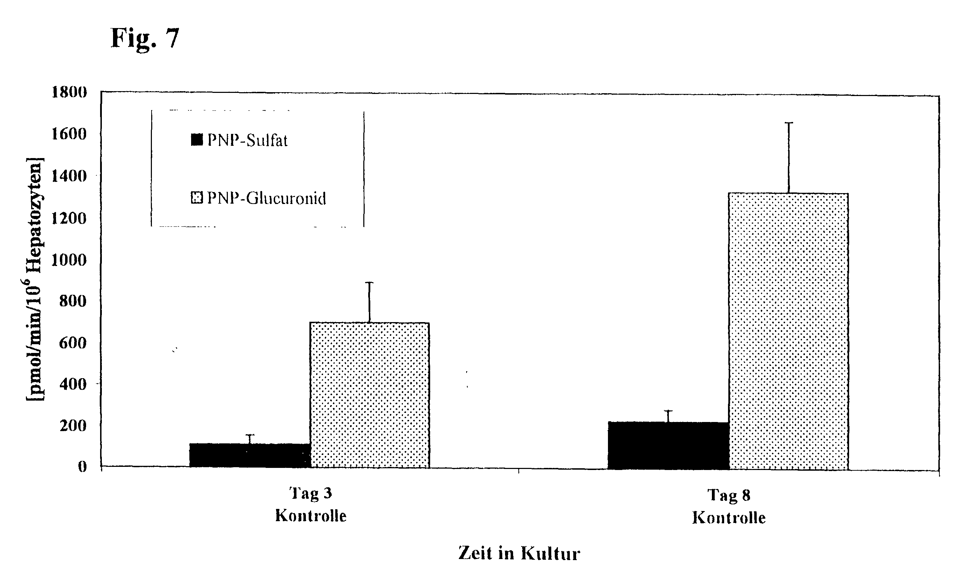

Fig. 7 zeigt die Glucuronosyltransferase- und die Sulfotrasferase Aktivität, die durch Konjugation von p-Nitrophenol in humanen Hepatozyten nach Konservierung am 3. und 8. Tag gemessen wurde. Die Graphik zeigt Mittelwerte aus fünf Versuchen. Im Kulturverlauf zeigen sich regenerierende metabolische Aktivitäten und ein Anstieg der Glucuronidierung am 8. Kulturtag.

Insgesamt wurde bei diesen Versuchen festgestellt, daß alle Aktivitäten der Cytochrom P450 Isoenzyme in Leberzellen, die in der erfindungsgemäßen Konservierungslösung gelagert wurden, vollständig erhalten und induzierbar waren.

### 6. Bestimmung von Zellschädigung und differenzierter Zellfunktion

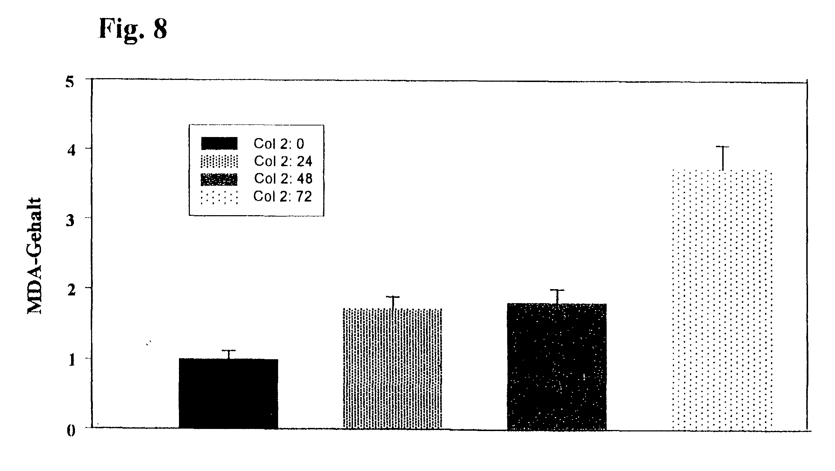

Weiterhin wurden Versuche durchgeführt, um die lipidperoxidative Zellschädigung in humanen Hepatozyten zu bestimmen. Hierzu wurde der Malondialdehyd-Gehalt, der als Maß für die lipidperoxidative Zellschädigung angesehen wird, im Zeitverlauf über 72 h Konservierungszeit gemessen. Die Ergebnisse sind in Fig. 8 gezeigt.

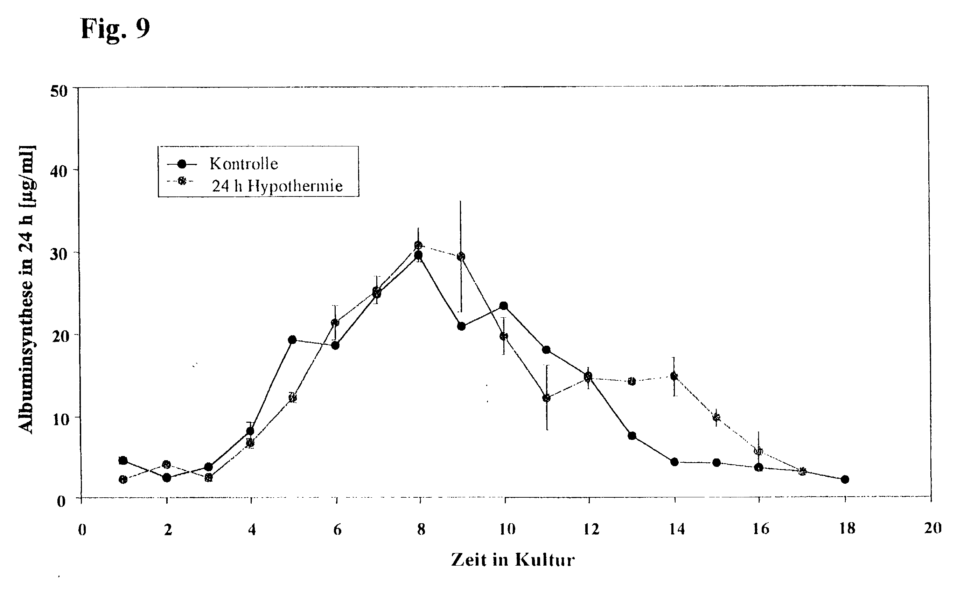

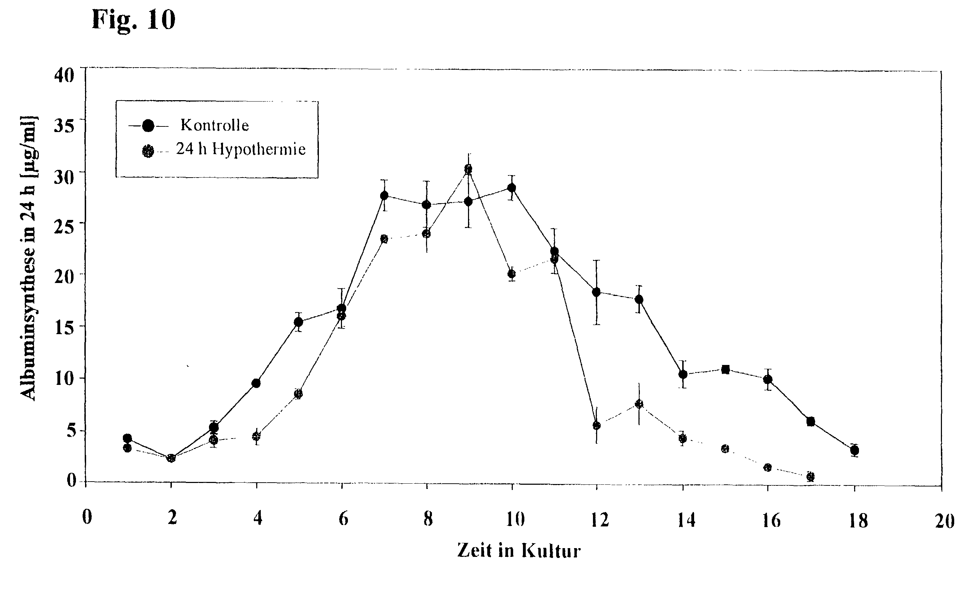

Um die differenzierte Zellfunktion in konservierten humanen Hepatozyten zu messen, wurde die Albuminsekretion bestimmt. Hierzu wurden vergleichende Untersuchungen zwischen nicht aufgereinigten und aufgereinigten Zellen unternommen, wobei für die Aufreinigung eine Percoll-Dichtegradienten-Zentrifugation (Sambrook et al., supra) durchgeführt wurde. Die Ergebnisse sind in den Fig. 9 und 10 gezeigt.

## Patentansprüche

1. Lösung zur Konservierung menschlicher Leberzellen, welche Natriumlaktobionat, Kalium-Hydrogen-Phosphat, Magnesiumsulfat, Raffinose und Glutathion sowie Fructose, Adenosin und Glycin als Bestandteile aufweist.

2. Lösung nach Anspruch 1, welche
50-200 mM Natriumlaktobionat, 20-40 mM Kalium-Hydrogen-Phosphat, 2-10 mM Magnesiumsulfat, 10-40 mM Raffinose und 1-5 mM Glutathion aufweist.

3. Lösung nach Anspruch 1 oder 2, die
80-150 mM, insbesondere 100 mM Natriumlaktobionat, 20-35 mM, insbesondere 25 mM Kalium-Hydrogen-Phosphat, 4-8 mM, insbesondere 5 mM Magnesiumsulfat, 20-40 mM, insbesondere 30 mM Raffinose und 2-4 mM, insbesondere 3mM Glutathion aufweist.

4. Lösung nach einem der Ansprüche 1 bis 3,
**dadurch gekennzeichnet, dass**
sie weiterhin Calciumchlorid aufweist.

5. Lösung nach Anspruch einem der Ansprüche 1 bis 4,
**dadurch gekennzeichnet, dass**
sie 1-10 mM Fructose, 1,5-4,5 mM Glycin und 1-3 mM Adenosin aufweist.

6. Lösung nach Anspruch 4,
**dadurch gekennzeichnet, dass**
sie 1,5-3 mM Calciumchlorid aufweist.

7. Verfahren zur Herstellung konservierter menschlicher Leberzellen,
**dadurch gekennzeichnet, dass**
das Verfahren folgende Schritte aufweist:
(i) Isolierung *in vitro* von mindestens einer menschlichen Leberzelle aus Lebergewebe;
(ii) gegebenenfalls Waschen der isolierten Leberzelle in der Konservierungslösung nach einem der Ansprüche 1 bis 6;
(iii) Konservieren der isolierten Leberzelle in der Konservierungslösung gemäß einem der Ansprüche 1 bis 6 und
(iv) Reoxigenierung der isolierten Leberzelle.

8. Verfahren nach Anspruch 7,
**dadurch gekennzeichnet, dass**
die Leberzellen beim Konservieren in der Konservierungslösung sauerstofffrei gemacht werden, insbesondere durch Heliumbegasung.

9. Verfahren nach Anspruch 7 oder 8,
**dadurch gekennzeichnet, dass**
das Konservieren in der Konservierungslösung bei 4°C erfolgt.

10. Verfahren nach Anspruch 7,
**dadurch gekennzeichnet, dass**
zur Reoxigenierung ein Reoxigenierungsmedium eingesetzt wird, dass Sauerstoff-Radikalfänger und/oder Membran-Stabilisatoren aufweist.

## Claims

1. A solution for the preservation of human liver cells, which solution includes sodium lactobionate, potassium hydrogen phosphate, magnesium sulfate, raffinose and glutathione, as well as fructose, adenosine and glycine as components.

2. The solution according to claim 1, which solution includes 50-200 mM sodium lactobionate, 20-40 mM potassium hydrogen phosphate, 2-10 mM magnesium sulfate, 10-40 mM raffinose, and 1-5 mM glutathione.

3. The solution according to claim 1 or 2, which solution includes 80-150 mM, particularly 100 mM sodium lactobionate, 20-35 mM, particularly 25 mM potassium hydrogen phosphate, 4-8 mM, particularly 5 mM magnesium sulfate, 20-40 mM, particularly 30 mM raffinose, and 2-4 mM, particularly 3 mM glutathione.

4. The solution according to any of claims 1 to 3,
**characterized in that**
the solution additionally includes calcium chloride.

5. The solution according to any of claims 1 to 4,
**characterized in that**
the solution includes 1-10 mM fructose, 1.5-4.5 mM glycine and 1-3 mM adenosine.

6. The solution according to claim 4,
**characterized in that**
the solution includes 1.5-3 mM calcium chloride.

7. A method for the production of preserved human liver cells,
**characterized in that**
the method comprises the following steps:
(i) *in vitro* isolation of at least one human liver cell from liver tissue;
(ii) optional washing of the isolated liver cell in the preservation solution according to any of claims 1 to 6;
(iii) preservation of the isolated liver cell in the preservation solution according to any of claims 1 to 6; and
(iv) reoxygenation of the isolated liver cell.

8. The method according to claim 7,
**characterized in that**
the liver cells are made free of oxygen during preservation in the preservation solution, particularly by means of helium gassing.

9. The method according to claim 7 or 8,
**characterized in that**
said preservation in the preservation solution is effected at 4°C.

10. The method according to claim 7,
**characterized in that**
a reoxygenation medium is used for reoxygenation, which includes oxygen radical scavengers and/or membrane stabilizers.

## Revendications

1. Solution de conservation des cellules du foie humaines, qui contient en tant que constituants du lactobionate de sodium, de l'hydrogénophosphate de potassium, du sulfate de magnésium, du raffinose et du glutathion ainsi que du fructose, de l'adénosine et de la glycine.

2. Solution selon la revendication 1, qui contient
50 à 200 mM de lactobionate de sodium, 20 à 40 mM d'hydrogénophosphate de potassium, 2 à 10 mM de sulfate de magnésium, 10 à 40 mM de raffinose et 1 à 5 mM de glutathion.

3. Solution selon la revendication 1 ou 2, qui contient
80 à 150 mM, notamment 100 mM de lactobionate de sodium, 20 à 35 mM, notamment 25 mM d'hydrogénophosphate de potassium, 4 à 8 mM, notamment 5 mM de sulfate de magnésium, 20 à 40 mM, notamment 30 mM de raffinose et 2 à 4 mM, notamment 3 mM de glutathion.

4. Solution selon une des revendications 1 à 3,
**caractérisée en ce qu'**elle contient en plus du chlorure de calcium.

5. Solution selon une des revendications 1 à 4,
**caractérisée en ce qu'**elle contient 1 à 10 mM de fructose, 1,5 à 4,5 mM de glycine et 1 à 3 mM d'adénosine.

6. Solution selon la revendication 4,
**caractérisée en ce qu'**elle contient 1,5 à 3 mM de chlorure de calcium.

7. Procédé de préparation de cellules du foie humaines conservées,
**caractérisé en ce que** le procédé comporte les étapes suivantes :
(i) isoler *in vitro* au moins une cellule de foie humaine à partir d'un tissu de foie,
(ii) éventuellement laver les cellules du foie isolées dans la solution de conservation selon une des revendications 1 à 6,
(iii) conserver les cellules du foie isolées dans la solution de conservation selon une des revendications 1 à 6 et
(iv) réoxygéner les cellules du foie isolées.

8. Procédé selon la revendication 7,
**caractérisé en ce qu'**on enlève l'oxygène des cellules du foie au cours de la conservation dans la solution de conservation, notamment par gazage à l'hélium.

9. Procédé selon la revendication 7 ou 8,
**caractérisé en ce que** la conservation dans la solution de conservation s'effectue à 4°C.

10. Procédé selon la revendication 7,
**caractérisé en ce que**, pour la réoxygénation, on utilise un milieu de réoxygénation, qui contient des capteurs de radicaux d'oxygène et/ou des agents stabilisants membranaires.
